# EUROPÄISCHE PATENTSCHRIFT

(11) **EP 0 468 982 B1**
(45) Veröffentlichungstag und Bekanntmachung des Hinweises auf die Patenterteilung: **16.06.1993**
(21) Anmeldenummer: 90905455.3
(22) Anmeldetag: 30.03.1990
(51) Int. Cl.: B60K 28/16, B60K 31/02

(54) **VORRICHTUNG FÜR KRAFTFAHRZEUGE MIT VORTRIEBSREGELUNG UND FAHRZEUGGESCHWINDIGKEITSKONSTANTREGELUNG**
DEVICE FOR MOTOR VEHICLES, WITH FORWARD-DRIVE CONTROL AND CONSTANT-TRAVEL-SPEED CONTROL
DISPOSITIF POUR VEHICULES A MOTEUR POURVUS D'UN REGLAGE DE LA PROPULSION ET D'UN REGLAGE CONTINU DE LA VITESSE DU VEHICULE

(30) Priorität: 21.04.1989 DE 3913058
(43) Veröffentlichungstag der Anmeldung: 05.02.1992
(73) Patentinhaber: ROBERT BOSCH GMBH, 70442 Stuttgart (DE)
(72) Erfinder: MAISCH, Wolfgang, Dr.-Ing., D-7141 Schwieberdingen (DE); JONNER, Wolf-Dieter, Dipl.-Ing (FH), D-7141 Beilstein-Schmidhausen (DE)
(86) Internationale Anmeldenummer: EP9000502
(87) Internationale Veröffentlichungsnummer: WO9012701

(56) Entgegenhaltungen:
- EP-A- 0 278 232
- DE-A- 3 808 236
- DE-A- 3 836 471
- GB-A- 2 186 024
- GB-A- 2 187 311
- US-A- 4 714 864
- PATENT ABSTRACTS OF JAPAN, Band 13, Nr. 334 (M-855)(3682), 27. Juli 1989

## Beschreibung

### Stand der Technik

Eine Vorrichtung der im Oberbegriff des Anspruchs 1 angegebenen Art ist aus der GB-A-2 186 024 bekannt. Dort (Fig. 4) ist das Gaspedal über ein Gestänge mit der Drosselklappe verbunden, wobei in das Gestänge zwei Hebel eingeschaltet sind, die eine vom Fahrer unabhängige Verlängerung des Gestänges erlauben. Auf den einen Hebel wirkt eine ASR und auf den anderen eine Fahrgeschwindigkeitskonstantregelung. Bei ASR ist die Fahrgeschwindigkeitskonstantregelung unwirksam.

Bei der Anordnung der DE-A1-3 608 790 weist der Steller einen Motor und ein schaltbares Getriebe auf, womit der Steller mit den beiden Teilen des Kraftübertragungswegs gekoppelt werden kann. Der Motor und das Getriebe werden als Steller sowohl für den ASR-Fall als auch für die Fahrzeuggeschwindigkeitskonstantregelung FGR verwendet, wozu das Getriebe über Elektromagnete unterschiedlich eingeschaltet wird. Diese Ausbildung wird möglich, weil davon ausgegangen wird, daß im ASR-Fall das Stellglied nur im Sinne einer Verringerung der Betriebsmittelzufuhr und im Fahrgeschwindigkeitskonstanthaltefall nur im Sinne einer Erhöhung der Betriebsmittelzufuhr bezogen auf die Fahrpedalstellung verstellt werden muß.

### Vorteile der Erfindung

Die erfindungsgemäße Lösung ermöglicht bei vorgegebener Funktion der Fahrzeuggeschwindigkeitskonstantregelung eine kostengünstige Lösung für die Antriebsschlupfregelung mit Eingriff in die Beeinflussung der Betriebsmittelzufuhr, also insb. Regelung mit Drosselklappenverstellung.

Der Steller ist bei der Erfindung zwischen Fahrpedal und Drosselklappe gelegt. Damit ist ASR-Betrieb bei Betätigung durch den Fahrer möglich. Bei ASR-Anforderung im Fahrgeschwindigkeitkonstantbetrieb wird der Konstanthalteregler durch das ASR-Steuergerät deaktiviert. Beim vollständigen Abschalten, auch bei nur kurzzeitig erforderlichem ASR-Eingriff, entstünde folgende Problematik. Wenn beim Fahren im niedrigen Gang der Konstantregelung auf glatter Fahrbahn abgeschaltet wird, dann wird das Motorbremsmoment so groß, daß das Fahrzeug unlenkbar (bei Vorderradantrieb) oder fahrinstabil (bei Hinterradantrieb) werden kann.

Es wäre ferner ärgerlich für den Fahrer, wenn bei nur kurzzeitigem ASR-Einsatz die Konstantregelung desaktiviert werden würde. Es wird deshalb vorgeschlagen, die Konstanthalteregelung bei ASR-Eingriff nicht sofort, sondern nach einer kurzen Verzögerungszeit abzuschalten. Diese Zeit kann optimiert werden unter Berücksichtigung des automatischen Bremseneingriffs und des Fahrkomforts. Damit wird bei nur sehr kurzzeitigem ASR-Eingriff die Konstantregelung nicht deaktiviert. Bei einem länger andauernden ASR-Eingriff muß die Konstanthalteregelung mit Rücksicht auf die Belastung der Radbremsen abgeschaltet werden. Gemäß einer weiteren Ausgestaltung der Erfindung wird im ASR-Fall die Sollgeschwindigkeit der Konstanthalteregelung insb. kontinuierlich erniedrigt, also das Unwirksammachen über einen Zeitraum verteilt. Um nicht eine Wiederaktivierung der Konstanthalteregelung durch den Fahrer erforderlich zu machen, wird nach ASR-Eingriff die Konstanthalteregelung automatisch reaktiviert. Bei einem mehrere hundert Millisekunden lang dauernden ASR-Eingriff wird die Konstant-halteregelung mindestens kurzzeitig automatisch reaktiviert, um eventuelles Schleudern des Fahrzeugs infolge zu hohen Schleppmoments zu vermeiden und den Fahrer vom Wiedereinschalten des Konstanthalteregelung zu entlasten. Das Wiedereinsetzen der Konstanthalteregelung sollte nicht sprungartig erfolgen. Es wird deshalb übergangszeitliche Spätzündung als Mittel zur Reduzierung eines Drehmomentsprungs des Fahrzeugmotors angewandt.

### Figurenbeschreibung

Anhand der Zeichnung werden Ausführungsbeispiele der Erfindung erläutert.

Es zeigen:
- Fig. 1: eine Prinzipdarstellung einer erfindungsgemäßen Vorrichtung
- Fig. 2: ein Blockschaltbild zur Erläuterung von Reglerfunktionen

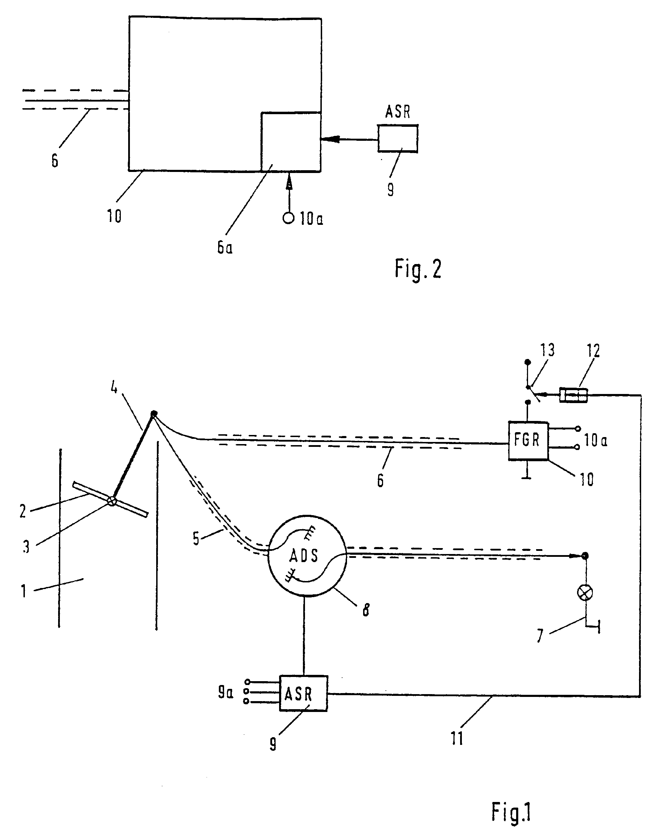

In Fig. 1 ist in einem Saugrohr 1 eine Drosselklappe 2 dargestellt, die um einen Drehpunkt 3 mittels an einem Hebel 4 angreifender Kräfte verstellt werden kann. Die Kräfte werden im gezeigten Ausführungsbeispiel von Bowdenzügen 5 und 6 übertragen. Bowdenzug 5 überträgt die über ein Fahrpedal 7 ausgeübte Kraft. In dem Bowdenzug 5 ist ein Steller 8 eingeschaltet, der im Falle von Antriebsschlupf von einem Steuergerät 9, dem über Klemmen 9a Radgeschwindigkeitssignale zugeführt werden, angesteuert wird und der über den linken Teil des Bowdenzugs 5 eine Drosselklappenverstellung im Sinne einer Antriebs-schlupfverringerung bewirkt. Der Steller 8 kann von beliebiger bekannter Art sein.

Auf den gleichen Hebel 4 wirkt auch ein Bowdenzug 6 ein, der von einem Block 10 bedient wird. Diesen Block 10 werden über Klemmen 10a die Fahrzeuggeschwindigkeit und die Sollgeschwindigkeit zugeführt. Die Abweichung der Fahrzeuggeschwindigkeit von der Sollgeschwindigkeit wird in eine Bowdenzugbetätigung umgesetzt und dadurch die Drosselklappe 2 verstellt.

Bei einem ASR-Fall gibt das Steuergerät 9 ein Signal über eine Leitung 11 und ein Zeitglied 12 zu einem elektrischen, hier als Kontakt 13 dargestellten Schalter. Das Zeitglied verzögert das Wirksamwerden des Signals für eine Zeit. Mit dem Wirksamwerden des Signals danach wird der Schalter 13 undurchlässig und schaltet damit den Block 10 von der Versorgungsspannung ab.

Die Fig. 2 zeigt den Block 10 mit einem Teil des Bowdenzugs 6. Der Kasten 6a wird durch das ASR-Signal des Steuergeräts 9 aktiviert. Dieser soll vorher über die Klemme 10a auf einer bestimmten Sollgeschwindigkeitswert gesetzt worden sein. Ab dem Vorliegen des ASR-Signals wird nun dieser Sollgeschwindigkeitswert mit einem vorgegebenen Gradienten erniedrigt, bis schließlich bei länger dauernder ASR die Konstantregelung unwirksam ist. Mit Verschwinden des ASR-Signals wird dann die Sollgeschwindigkeit automatisch wieder auf die ursprüngliche Sollgeschwindigkeit erhöht. Um jedoch das Wiedereinsetzen der Konstanthalteregelung nicht sprungartig erfolgen zu lassen, wird in einer Übergangszeit auf Spätzündung des Motors gestellt und hierdurch der Drehmomentensprung reduziert.

## Patentansprüche

1. Vorrichtung für Kraftfahrzeuge mit Vortriebsregelung und einschaltbarer Fahrgeschwindigkeitskonstantregelung, bei der in den Kraftübertragungsweg vom durch den Fahrer betätigten Steuerhebel für die Betriebsmittelzufuhr zum Stellglied für die Betriebsmittelzufuhr ein Steller eingeschaltet ist, der im Falle einer festgestellten Durchdrehneigung wenigstens eines der angetriebenen Räder (Antriebsschlupfregelung) eine Verstellung des Stellglieds (bei gleichzeitiger Rückwirkung auf den Steuerhebel) bewirkt, bei der die Fahrgeschwindigkeitskonstantregelung ebenfalls über einen gesonderten Kraftübertragungsweg auf das Stellglied (DK) einwirkt, bei der im ASR-Fall die Fahrgeschwindigkeitskonstantregelung (FRG) unwirksam gemacht wird, und am Ende des ASR-Falls die Fahrgeschwindigkeitskonstantregelung (FRG) automatisch reaktiviert wird, dadurch gekennzeichnet, daß das Unwirksammachen der Fahrzeuggeschwindigkeitkonstantregelung (FGR) erst nach einer Verzugszeit nach Einsetzen des ASR-Falls erfolgt, und daß in der Phase der Reaktivierung der Fahrgeschwindigkeitskonstantregelung eine Zündzeitpunktsverstellung vorgenommen wird.

2. Vorrichtung nach Anspruch 1, dadurch gekennzeichnet, daß das Unwirksammachen durch eine Reduzierung der Sollfahrgeschwindigkeit mit vorgegebener Steigung erfolgt.

## Claims

1. Device for motor vehicles having forward-drive control and constant-travel-speed control which can be switched on and in which there is a regulating unit in the power transmission from the control lever, actuated by the driver, for the fuel supply, to the regulating element for the fuel supply, which regulating unit brings about an adjustment of the regulating element (with simultaneous effect on the control lever) when an inclination to slip is detected at at least one of the driven wheels (drive slip control), in which the constant-travel-speed control also acts via a separate power transmission on the regulating element (DK), in which in ASR conditions the constant-travel-speed control (FRG) [sic] is made inactive, and at the end of the ASR conditions the constant-travel-speed control (FRG) [sic] is automatically reactivated, characterised in that the deactivation of the constant-travel-speed control (FGR) only occurs after a period of retardation after the ASR conditions occur, and in that an ignition point adjustment is carried out in the phase of the reactivation of the constant-travel-speed control.

2. Device according to Claim 1, characterised in that the deactivation occurs by means of a reduction of the desired speed at a predetermined gradient.

## Revendications

1. Dispositif pour des véhicules automobiles à régulation de l'entraînement et à régulation de vitesse de déplacement constante, qui peut être mise en oeuvre, dispositif dans lequel le chemin de transmission de la force allant du levier de commande actionné par le conducteur pour l'alimentation en moyen d'entraînement jusqu'à l'organe de réglage de l'alimentation en moyen d'entraînement comporte un organe de réglage qui dans le cas où est constatée une tendance au patinage d'au moins l'une des roues motrices (régulation du patinage à l'entraînement) il y a déplacement de l'organe de réglage (avec réaction simultanée sur le levier de commande) la régulation de la vitesse de déplacement constante agissant également sur l'organe de réglage (DK) par l'intermédiaire d'un chemin particulier de transmission de force, la régulation de vitesse constante (FRG) étant désactivée dans le mode ASR, et à la fin du mode ASR, la régulation de vitesse de déplacement constante (FRG) est réactivée automatiquement, dispositif caractérisé en ce que la désactivation de la régulation de vitesse de déplacement constante (FGR) ne se fait qu'après une période de temporisation comptée à partir de la mise en oeuvre du mode ASR, et dans la phase de réactivation de la régulation de vitesse de déplacement constante on modifie le réglage de l'instant d'allumage.

2. Dispositif selon la revendication 1, caractérisé en ce que la désactivation se fait par une réduction de la vitesse de déplacement de consigne, suivant une pente prédéterminée.
